# NEUE EUROPÄISCHE PATENTSCHRIFT

(11) **EP 0 576 498 B2**
(45) Veröffentlichungstag und Bekanntmachung des Hinweises auf die Entscheidung über den Einspruch: **17.05.2000**
(45) Hinweis auf die Patenterteilung: 21.06.1995
(21) Anmeldenummer: 92906670.2
(22) Anmeldetag: 19.03.1992
(51) Int. Cl.: B05B 12/10, B05B 7/24

(54) **VERFAHREN UND VORRICHTUNG ZUM AUFBRINGEN EINER PASTÖSEN MASSE**
METHOD AND DEVICE FOR APPLYING A PASTE
PROCEDE ET DISPOSITIF D'APPLICATION D'UNE MATIERE PATEUSE

(30) Priorität: 27.03.1991 EP 91810228
(43) Veröffentlichungstag der Anmeldung: 05.01.1994
(73) Patentinhaber: SCA SCHUCKER GmbH, 75203 Königsbach-Stein (DE)
(72) Erfinder: SCHUCKER, Josef, D-7530 Pforzheim (DE)
(74) Vertreter: Wolf, Eckhard, Dr.-Ing.
(86) Internationale Anmeldenummer: EP9200613
(87) Internationale Veröffentlichungsnummer: WO9217281

(56) Entgegenhaltungen:
- EP-A- 0 259 689
- EP-A- 0 271 662
- EP-A- 0 373 341
- EP-A- 0 546 294
- WO-A-88/03059
- DE-A- 3 822 835
- US-A- 4 709 858

## Beschreibung

Die Erfindung betrifft ein verfahren und eine Vorrichtung zum Aufbringen einer aus einem härtbaren Klebstoff bestehenden pastösen Masse auf ein Werkstück in Form eines Massestreifens gemäß den Oberbegriff der Ansprüche 1 bis 3 und 6 bis 8.

Es ist eine Vorrichtung dieser Art bekannt (EP-A-0 373 341), bei der eine Regeleinrichtung zur konstanten Dosierung der aufgesprühten Materialmenge vorgesehen ist. Die Regeleinrichtung weist dazu einen den Druckabfall in der Sprüheinrichtung als mit der Durchflußmenge korrelierte Regelgröße erfassenden Drucksensor und ein nach Maßgabe der Regeldifferenz den Druchflußquerschnitt der Sprüheinrichtung vor der Austragsdüse verstellendes Servoventil auf. Damit sollen insbesondere während der Saughubphasen der den Förderdruck erzeugenden Kolbenpumpe auftretende Strömungsschwankungen ausgeglichen werden.

Als nachteilig hat sich dabei jedoch erwiesen, daß der gemessene Druckabfall zusätzlich zu seiner Abhängigkeit vom Massenstrom und Druchflußquerschnitt auch noch durch die insbesondere bei Klebstoffen stark temperaturabhängige Viskosität des aufzutragenden Materials beeinflußt wird. Wegen der somit fehlenden eindeutigen Beziehung zwischen der Regelgröße und der Aufgabengröße, d.h. dem eigentlich zu regelnden Massenstrom, kann mit der bekannten Vorrichtung insbesondere bei Viskositätsschwankungen ein Materialauftrag von gleichmäßiger Form nicht gewährleistet werden.

Ausgehend hiervon liegt der Erfindung die Aufgabe zugrunde, ein Verfahren und eine Vorrichtung der eingangs angegebenen Art zu entwickeln, womit ein gleichmäßiger Klebstoffauftrag auf die Werkstückoberfläche gewährleistet ist.

Zur Lösung dieser Aufgabe werden die in den Patentansprüchen 1 bis 3 sowie 6 bis 8 angegebenen Merkmalskombinationen Vorgeschlagen.

Nach dem erfindungsgemäßen verfahren wird die pastöse Masse mit einem den Klebstoffstrang auslenkenden und unter Bildung des Massestreifens verwirbelnden Druckgas beaufschlagt. Weiter wird der Volumen- oder Massenstrom der eine variable Viskosität aufweisenden pastösen Masse unter Variation des Förderdrucks bei konstantem Durchflußquerschnitt der Sprüheinrichtung auf einen vorgegebenen Sollwert eingeregelt.

Die funktionelle Abhängigkeit zwischen der Druckgaszufuhr und dem die Druckgaszufuhr bestimmenden Meßparameter kann beispielsweise in Form einer digital oder analog abrufbaren, empirisch ermittelten Eichkurve vorgegeben werden.

Der Volumen- oder Massenstrom kann mit Hilfe eines vor dem Sprühkopf in der Förderleitung angeordneten Durchflußmessers oder mit Hilfe einer Einrichtung zum Messen der Kolbengeschwindigkeit eines die Dosierpumpe bildenden Dosierzylinders gemessen werden.

Mit der über den Regler ansteuerbaren Dosierpumpe für die pastöse Masse steht als weiteres Maß für die in der Zeiteinheit applizierte Klebstoffmenge der auf den Kolben der Dosierpumpe wirkende Antriebsdruck zur Verfügung. Bei vorgegebener Dosiermenge ist der Druck um so höher, je höher die Viskosität der pastösen Masse ist. Dieser Druck ist also ein indirektes Maß für die Viskosität der pastösen Masse, die ihrerseits abhängig ist von der Temperatur und von der Zusammensetzung der pastösen Masse. Der Antriebsdruck wird üblicherweise über eine auf den Kolben wirkende Vorschubeinheit erzeugt, die beispielsweise elektrisch angetrieben ist. Damit kann die an die Vorschubeinheit angelegte elektrische Spannung, die im wesentlichen druckproportional ist, als Regelvariable für die Vorschubregelung und damit die Volumenstromregelung sowie als variable Steuergröße für die Druckgaszufuhr zum Spritzkopf unter Berücksichtigung einer Eichkurve abgegriffen werden. Aus physikalischer Sicht heißt dies, daß der an der Vorschubeinheit abgegriffene Spannungswert bei konstant eingeregeltem Massendurchsatz ein Maß für die Steifheit bzw. Zähigkeit des aus der Auftragsdüse austretenden Massestrangs ist.

Über die Steuerungseinrichtung kann ein Ventil für die Druckgaszufuhr so gesteuert werden, daß die in der Zeiteinheit mit der pastösen Masse verwirbelte Druckgasmenge so bemessen ist, daß der Sprühkopf einen Streifen pastöser Masse von im wesentlichen gleichbleibender Breite entlang dem Werkstück aufsprüht.

Mit den erfindungsgemäßen Maßnahmen wird der Erkenntnis Rechnung getragen, daß je nach Viskosität oder Steifheit des Klebstoffs ein mehr oder weniger zäher Klebstoffstrang mit gleichbleibendem Mengenstrom aus der Auftragsdüse des Sprühkopfes austritt. Andererseits benötigt man je nach Zähigkeit dieses Strangs eine mehr oder weniger große Luftmenge oder Luftgeschwindigkeit, um den Strang definiert auszulenken, um also zu einer definierten Streifenbreite zu gelangen. Die diesbezüglichen funktionellen Zusammenhänge werden vorteilhafterweise dadurch berücksichtigt, daß die Einrichtung zur Steuerung der Druckgaszufuhr einen analogen oder digitalen Eichkurvengenerator enthält.

Insbesondere bei großtechnischen Anwendungen, bei denen die Zufuhr der pastösen Masse nicht über einen Dosierzylinder, sondern über eine Ringleitung erfolgt, die an einzelnen Stationen angezapft wird, ist eine Förderstrommessung mit Hilfe eines Durchflußmeßgeräts, beispielsweise einer Zahnradmeßzelle oder einer induktiven Meßzelle notwendig, um eine Volumenstromregelung durchzuführen. Weiter ist in diesem Falle zusätzlich ein möglichst in der Nähe der Auftragsdüse angeordneter Drucksensor erforderlich, über den die Druckgaszufuhr (ebenfalls nach Maßgabe einer empirischen Eichkurve) gesteuert wird.

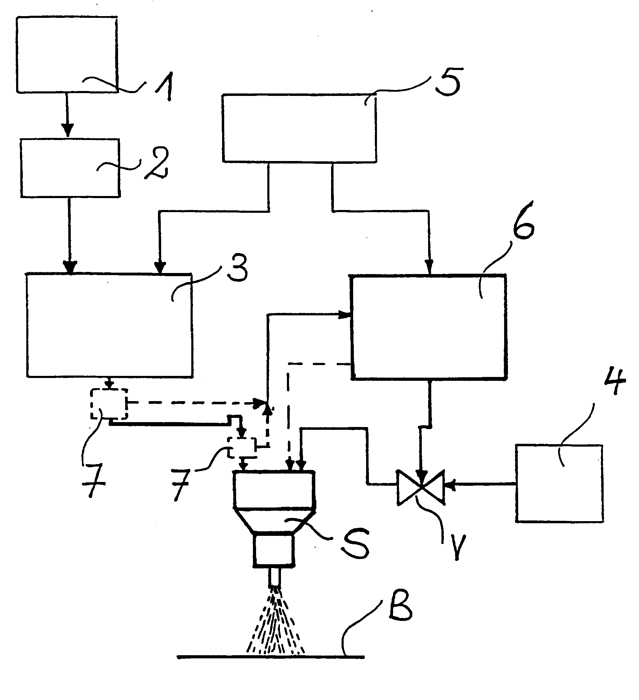

Im folgenden wird die Erfindung anhand der Zeichnung näher erläutert. Die einzige Figur zeigt ein Blockschaltbild eines bevorzugten Ausführungsbeispiels einer Leimauftragsvorrichtung.

Die in dem Blockschaltbild gezeigte Auftragsvorrichtung enthält einen Vorratsbehälter 1 für die pastöse Masse sowie eine Förderpumpe 2, die die pastöse Masse aus dem Vorratsbehälter 1 zu einer Dosiereinrichtung 3 fördert. Der Ausgang der Dosiereinrichtung ist mit einem Sprühkopf S verbunden. Weiter sind auf der Strecke zum Sprühkopf S noch Sensoren 7 (strichliert) vorgesehen. Ein weiterer Vorratsbehälter 4 oder ein Anschluß für ein Druckgas (Druckluft oder Inertgas) ist mit einem Ventil V verbunden, mit welchem die Druckgaszufuhr zum Sprühkopf S gesteuert werden kann. Weiter zeigt das Blockschaltbild eine Sollwerteinstellung 5, die sowohl mit der Dosiereinrichtung 3 als auch mit einer Steuerungseinrichtung 6 verbunden ist. Die Steuerungseinrichtung 6 ist eingangsseitig zusätzlich mit dem Ausgang des jeweiligen Sensors 7 verbunden, während sie ausgangsseitig mit dem Steuereingang des beispielsweise als Proportionalventil ausgebildeten Ventils V verbunden ist.

Die beispielsweise als härtbarer Kleb- oder Dichtstoff ausgebildete pastöse Masse wird aus dem Vorratsbehälter 1 mit Hilfe der Förderpumpe 2 zur Dosiereinrichtung 3 gefördert. Über die Sollwerteinstellung 5 wird die auf ein Werkstück, beispielsweise auf ein Karosserieblech B in der Zeiteinheit aufzutragende Kleb- oder Dichtstoffmenge eingestellt und in Form eines elektrischen Signals an die Dosiereinrichtung 3 weitergegeben, die aufgrund dieses Sollwerts die gewünschte Kleb- und Dichtstoffmenge zum Sprühkopf S fördert. Ein Beispiel für die Ausgestaltung eines solchen Sprühkopfs S ist in EP-A-0 367 985 beschrieben.

Der aus einer Auftragsdüse des Sprühkopfs S austretende Kleb- oder Dichtstoffstrang wird mit der über das Ventil V ankommenden Druckluft verwirbelt und auf das Blech B aufgesprüht. Gleichzeitig werden der Sprühkopf S und das Werkstück B in Richtung des aufzutragenden Streifens relativ zueinander bewegt. Um eine gleichbleibende Streifenbreite auf dem Werkstück B zu erhalten, muß bei gleichbleibender Viskosität des Kleb- oder Dichtstoffs stets der gleiche Druckluftstrom zugeführt werden. Der Sollwert für die dem Kleber beizumischende Luftmenge wird über die Sollwerteinstelleinrichtung 5 an die Steuereinrichtung 6 weitergeleitet, über die ihrerseits der Durchlaßquerschnitt des Ventils V eingestellt wird.

Kommt es während des Betriebs zu Schwankungen in der Temperatur und der Zusammensetzung und damit in der Viskosität des Klebers, so muß bei einem vorgegebenen Massefluß der Förderdruck entsprechend nachgeführt werden. Wegen der gleichzeitig eintretenden Zähigkeitsänderung bedarf es auch einer Änderung der Druckluftzufuhr, um zur gleichen Streifenbreite zu gelangen. Dies erfolgt mit Hilfe eines in der Steuerungseinrichtung 6 enthaltenen Eichkurvengenerators, dessen variable Parameter empirisch ermittelt und eingestellt werden. Die variablen Regel- oder Steuergrößen, wie Massedurchsatz, Druck, Temperatur, werden mit Hilfe der Sensoren 7 an der Ausgangsseite der Dosiereinrichtung 3 oder an der Eingangsseite des Sprühkopfes 5 erfaßt und vorzugsweise in Form elektrischer Signale an die Steuerungseinrichtung 6 zum Zwecke der Ansteuerung des Ventils V weitergeleitet. Damit kann erreicht werden, daß die mit dem Kleb- oder Dichtstoffstrom verwirbelte Menge an Druckluft so gesteuert wird, daß stets die gleiche Sprühbreite erhalten wird. Damit werden die Probleme eines überschüssigen oder zu geringen Kleb- oder Dichtstoffauftrags vermieden und eine sichere Verklebung der Werkstücke gewährleistet.

Die Sensoren 7 sind vorzugsweise als Temperatursensor, Drucksensor oder als Mengenmeßzelle ausgebildet. Es können dabei auch mehrere Sensoren vorgesehen werden, beispielsweise einer am Austritt der Dosiereinrichtung 3 und einer am Klebstoffeintritt in den Dosierkopf S.

Als Kleb- und Dichtstoffe für solche Anwendungen eignen sich beispielsweise Epoxidharzkleber, Kleber auf Polyure-thanbasis oder Acrylatkleber; es sind aber auch andere Klebertypen geeignet. Grundsätzlich muß die pastöse Masse auch nicht ein Kleb- oder Dichtstoff sein. Die beschriebene Vorrichtung bzw. das mit ihr durchgeführte Verfahren ist prinzipiell auch für andere, im wesentlichen pastöse Massen geeignet, deren Viskosität in weiten Grenzen schwanken kann und die trotz dieser Eigenschaft gleichmäßig auf ein Werkstück B aufgetragen werden sollen.

Die erläuterte Vorrichtung oder das mit ihr durchgeführte Verfahren eignen sich besonders für den Einsatz in der industriellen Fertigung, insbesondere in Verbindung mit einem Industrieroboter.

Zusammenfassend ist folgendes festzustellen: Aus einem Vorratsbehälter 1 wird eine im wesentlichen pastöse Masse mittels einer Förderpumpe 2 zu einer Dosiereinrichtung 3 gefördert, welche die auf ein Werkstück B aufzubringende Menge an pastöser Masse festlegt. Die pastöse Masse wird dort zu einem Sprühkopf S geführt, wo sie mit Druckluft aus einem weiteren Vorratsbehälter 4 oder über einen entsprechenden Anschluß verwirbelt und auf das Werkstück B aufgesprüht wird. Dabei wird die Menge an Druckluft, die der pastösen Masse zum Aufsprühen zugeführt wird, mittels einer Steuerung 6 so gesteuert, daß ein Streifen von im wesentlichen gleichbleibender Breite auf das Werkstück B aufgesprüht wird.

## Patentansprüche

1. Verfahren zum Aufbringen einer aus einem härtbaren Klebstoff bestehenden pastösen Masse auf ein Werkstück (B), bei welchem die pastöse Masse unter Einwirkung eines Förderdrucks einer Sprüheinrichtung (S) zugeführt und dabei ein aus der Sprüheinrichtung austretender zäher Klebstoffstrang gebildet wird, bei welchem die pastöse Masse mit einem den Klebstoffstrang auslenkenden und unter Bildung eines Massestreifens verwirbelnden Druckgas beaufschlagt wird, wobei das Werkstück (B) und die Sprüheinrichtung (S) relativ zueinander bewegt werden, bei welchem der Förderdruck der pastösen Masse vor deren Eintritt in die Sprüheinrichtung (S) gemessen wird und bei welchem die in der Zeiteinheit zugeführte Druckgasmenge in funktioneller Abhängigkeit von dem gemessenen Förderdruck so gesteuert wird, daß ein Streifen pastöser Masse von gleichbleibender Breite entlang dem Werkstück (B) aufgesprüht wird, **dadurch gekennzeichnet, daß** der Volumen- oder Massenstrom der eine variable Viskosität aufweisenden pastösen Masse über die Kolbengeschwindigkeit eines eine Dosiereinrichtung bildenden Dosierzylinders gemessen und unter Variation des Förderdrucks bei konstantem Durchflußquerschnitt der Sprüheinrichtung (5) auf einen vorgegebenen Sollwert eingeregelt wird.

2. Verfahren zum Aufbringen einer aus einem härtbaren Klebstoff bestehenden pastösen Masse auf ein Werkstück (B), bei welchem die pastöse Masse unter Einwirkung eines Förderdrucks einer Sprüheinrichtung (S) zugeführt und dabei ein aus der Sprüheinrichtung austretender zäher Klebstoffstrang gebildet wird, bei welchem die pastöse Masse mit einem den Klebstoffstrang auslenkenden und unter Bildung eines Massestreifens verwirbelnden Druckgas beaufschlagt wird, wobei das Werkstück (B) und die Sprüheinrichtung (S) relativ zueinander bewegt werden, bei welchem der Volumen- oder Massenstrom der eine variable Viskosität aufweisenden pastösen Masse unter Variation des Förderdrucks bei konstantem Durchflußquerschnitt der Sprüheinrichtung (S) auf einen vorgegebenen Sollwert eingeregelt wird, **dadurch gekennzeichnet, daß** die Temperatur der pastösen Masse als Maß für deren Viskosität vor deren Eintritt in die Sprüheinrichtung (S) gemessen wird und die in der Zeiteinheit zugeführte Druckgasmenge in funktioneller Abhängigkeit von der gemessenen Temperatur so gesteuert wird, daß ein Streifen pastöser Masse von gleichbleibender Breite entlang dem Werkstück (B) aufgesprüht wird.

3. Verfahren zum Aufbringen einer aus einem härtbaren Klebstoff bestehenden pastösen Masse auf ein Werkstück (B), bei welchem die pastöse Masse unter Einwirkung eines Förderdrucks einer Sprüheinrichtung (S) zugeführt und dabei ein aus der Sprüheinrichtung austretender zäher Klebstoffstrang gebildet wird, bei welchem die pastöse Masse mit einem den Klebstoffstrang auslenkenden und unter Bildung eines Massestreifens verwirbelnden Druckgas beaufschlagt wird, wobei das Werkstück (B) und die Sprüheinrichtung (S) relativ zueinander bewegt werden, **dadurch gekennzeichnet, daß** der Volumen- oder Massenstrom der eine variable Viskosität aufweisenden pastösen Masse durch Variation des Antriebsdrucks oder der Antriebsleistung einer vorzugsweise elektrisch angetriebenen Dosiervorrichtung (3) unter Variation des Förderdrucks bei konstantem Durchflußquerschnitt der Sprüheinrichtung (S) auf einen vorgegebenen Sollwert eingeregelt wird, und die in der Zeiteinheit zugeführte Druckgasmenge in funktioneller Abhängigkeit von dem Antriebsdruck bzw. der Antriebsleistung oder der daraus abgeleiteten Antriebsspannung so gesteuert wird, daß ein Streifen pastöser Masse von gleichbleibender Breite entlang dem Werkstück (B) aufgesprüht wird.

4. Verfahren nach einem der Ansprüche 2 oder 3, **dadurch gekennzeichnet, daß** der Volumen- oder Massenstrom unmittelbar mittels eines Durchflußmessers oder mittelbar über die Kolbengeschwindigkeit eines eine Dosiervorrichtung (3) bildenden Dosierzylinders gemessen wird.

5. Verfahren nach einem der Ansprüche 1 bis 4, **dadurch gekennzeichnet, daß** die funktionelle Abhängigkeit in Form einer digital oder analog abrufbaren, empirisch ermittelbaren Eichkurve vorgegeben wird.

6. Vorrichtung zum Aufbringen einer aus einem härtbaren Klebstoff bestehenden pastösen Masse auf ein Werkstück (B) in Form eines Massestreifens, mit einem mit der pastösen Masse beaufschlagbaren, relativ zum Werkstück (B) bewegbaren Sprühkopf (S), aus dem die pastöse Masse als zäher Klebstoffstrang austritt und der mit einem den Klebstoffstrang auslenkenden und unter Bildung des Massestreifens verwirbelnden Druckgas beaufschlagbar ist, mit einem vor dem Sprühkopf (S) angeordneten Drucksensor (7) zur Messung des Förderdrucks der pastösen Masse und mit einer auf den gemessenen Förderdruck ansprechenden Einrichtung (6) zur Steuerung der Druckgaszufuhr zum Sprühkopf (S) nach Maßgabe einer vorgebbaren Breite des entlang dem Werkstück (B) aufgetragenen Massestreifens, **gekennzeichnet durch** eine Dosiereinrichtung, die eine Einrichtung zur Messung der Kolbengeschwindigkeit eines die Dosiereinrichtung bildenden Dosierzylinders als Maß für den Volumenstrom aufweist, und einen vor dem Sprühkopf (S) angeordneten, die Dosiereinrichtung ansteuernden Regler, durch welchen der Volumen- oder Massenstrom der eine variable Viskosität aufweisenden pastösen Masse unter Variation des Förderdrucks bei konstantem Durchflußquerschnitt im Sprühkopf (S) auf einen vorgegebenen Sollwert einregelbar ist.

7. Vorrichtung zum Aufbringen einer aus einem härtbaren Klebstoff bestehenden pastösen Masse auf ein Werkstück (B) in Form eines Massestreifens, mit einem mit der pastösen Masse beaufschlagbaren, relativ zum Werkstück (B) bewegbaren Sprühkopf (S), aus dem die pastöse Masse als zäher Klebstoffstrang austritt und der mit einem den Klebstoffstrang auslenkenden und unter Bildung des Massestreifens verwirbelnden Druckgas beaufschlagbar ist, **gekennzeichnet durch** einen vor dem Sprühkopf (S) angeordneten, eine Dosierpumpe ansteuernden Regler, durch welchen der Volumen- oder Massenstrom der eine variable Viskosität aufweisenden pastösen Masse unter Variation des Förderdrucks bei konstantem Durchflußquerschnitt im Sprühkopf (S) auf einen vorgegebenen Sollwert einregelbar ist, einen vor dem Sprühkopf (S) angeordneten Temperatursensor (7) zur Messung der Temperatur der pastösen Masse als Maß für deren Viskosität und einer auf die gemessene Temperatur ansprechenden Einrichtung (6) zur Steuerung der Druckgaszufuhr zum Sprühkopf (S) nach Maßgabe einer vorgebbaren Breite des entlang dem Werkstück (B) aufgetragenen Massestreifens.

8. Vorrichtung zum Aufbringen einer aus einem härtbaren Klebstoff bestehenden pastösen Masse auf ein Werkstück (B) in Form eines Massestreifens, mit einem mit der pastösen Masse beaufschlagbaren, relativ zum Werkstück (B) bewegbaren Sprühkopf (S), aus dem die pastöse Masse als zäher Klebstoffstrang austritt und der mit einem den Klebstoffstrang auslenkenden und unter Bildung des Massestreifens verwirbelnden Druckgas beaufschlagbar ist, **gekennzeichnet durch** einen vor dem Sprühkopf (S) angeordneten, eine vorzugsweise elektrisch angetriebene Dosierpumpe ansteuernden Regler, durch welchen der Volumen- oder Massenstrom der eine variable Viskosität aufweisenden pastösen Masse unter Variation des Förderdrucks bei konstantem Durchflußquerschnitt im Sprühkopf (S) auf einen vorgegebenen Sollwert einregelbar ist, und eine auf den Antriebsdruck bzw. die Antriebsleistung oder -Spannung der Dosierpumpe ansprechenden Einrichtung (6) zur Steuerung der Druckgaszufuhr zum Sprühkopf (S) nach Maßgabe einer vorgebbaren Breite des entlang dem Werkstück (B) aufgetragenen Massestreifens.

9. Vorrichtung nach einem der Ansprüche 6 bis 8, **gekennzeichnet durch** einen vor dem Sprühkopf (S) in einer Förderleitung angeordneten Durchflußmesser zur Bestimmung des Volumen- oder Massenstroms der pastösen Masse.

10. Vorrichtung nach einem der Anprüche 7 bis 9, **gekennzeichnet durch** eine Einrichtung zur Messung der Kolbengeschwindigkeit eines die Dosierpumpe (3) bildenden Dosierzylinders als Maß für den Volumenstrom.

11. Vorrichtung nach einem der Anprüche 6 bis 10, **dadurch gekennzeichnet, daß** die Einrichtung (6) zur Steuerung der Druckgaszufuhr einen analogen oder digitalen Eichkurvengenerator enthält.

## Claims

1. Method for applying a paste consisting of a hardenable adhesive to a workpiece (B), in which the paste is supplied under the influence of a delivery pressure to a spraying device (S) and a viscous adhesive ribbon emerging from the spraying device is formed in the process, in which the paste is acted upon by a pressure gas ejecting the adhesive ribbon and swirling it, forming a paste strip, the workpiece (B) and the spraying device (S) being moved relative to one another, in which the delivery pressure of the paste is measured prior to its entry into the spraying device (S) and in which the quantity of pressure gas supplied in the unit of time is controlled in functional dependence on the delivery pressure measured such that a strip of paste of a constant width is sprayed along the workpiece (B), characterized in that the volume flow or mass flow of the paste of variable viscosity is measured via the piston velocity of a metering cylinder forming the metering device and adjusted to a preset setpoint by variation of the delivery pressure at a constant flow cross-section of the spraying device (5).

2. Method for applying a paste consisting of a hardenable adhesive to a workpiece (B), in which the paste is supplied under the influence of a delivery pressure to a spraying device (S) and a viscous adhesive ribbon emerging from the spraying device is formed in the process, in which the paste is acted upon by a pressure gas ejecting the adhesive ribbon and swirling it, forming a paste strip, the workpiece (B) and the spraying device (S) being moved relative to one another, in which the volume flow or mass flow of the paste of variable viscosity is adjusted to a preset setpoint by variation of the delivery pressure at a constant flow cross-section of the spraying device (S), characterized in that the temperature of the paste is measured as a measure of its viscosity prior to its entry into the spraying device (S) and the quantity of pressure gas supplied in the unit of time is controlled in functional dependence on the temperature measured such that a strip of paste of constant width is sprayed along the workpiece (B).

3. Method for applying a paste consisting of a hardenable adhesive to a workpiece (B), in which the paste is supplied under the influence of a delivery pressure to a spraying device (S) and a viscous adhesive ribbon emerging from the spraying device is formed in the process, in which the paste is acted upon by a pressure gas ejecting the adhesive ribbon and swirling it, forming a paste strip, the workpiece (B) and the spraying device (S) being moved relative to one another, characterized in that the volume flow or mass flow of the paste of variable viscosity is adjusted to a preset setpoint by variation of the drive pressure or the driving power of a preferably electrically driven metering device (3) with variation of the delivery pressure at a constant flow cross-section of the spraying device (S), and the quantity of pressure gas supplied in the unit of time is controlled in functional dependence on the drive pressure or the driving power or the drive voltage derived therefrom such that a strip of paste of constant width is sprayed along the workpiece (B).

4. Method according to claim 2 or 3, characterized in that the volume flow or mass flow is measured directly by means of a flow meter or indirectly via the piston velocity of a metering cylinder forming the metering device (3).

5. Method according to any one of claims 1 to 4, characterized in that the functional relationship is specified in the form of an empirically ascertained calibration curve which can be retrieved in a digital or analog manner.

6. Device for applying a paste consisting of a hardenable adhesive to a workpiece (B) in the form of a paste strip, with a spray head (S) actuatable by the paste and movable relative to the workpiece (B), from which head the paste emerges as a viscous adhesive ribbon and which can be acted upon by a pressure gas ejecting the adhesive ribbon and swirling it, forming the paste strip, with a pressure sensor (7) disposed in advance of the spray head (S) for measuring the delivery pressure of the paste and with a device (6) responding to the delivery pressure measured for controlling the pressure gas supply to the spray head (S) according to a predeterminable width of the paste strip applied along the workpiece (B), characterized by a metering device, which has a device for measuring the piston velocity of a metering cylinder forming the metering device as a measure of the volume flow, and a controller disposed in advance of the spray head (S) and activating the metering device, by means of which controller the volume flow or mass flow of the paste of variable viscosity is adjustable to a preset setpoint by variation of the delivery pressure at a constant flow cross-section in the spray head (S).

7. Device for applying a paste consisting of a hardenable adhesive to a workpiece (B) in the form of a paste strip, with a spray head (S) actuatable by the paste and movable relative to the workpiece (B), from which head the paste emerges as a viscous adhesive ribbon and which can be acted upon by a pressure gas ejecting the adhesive ribbon and swirling it, forming the paste strip, characterized by a controller disposed in advance of the spray head (S) and activating a metering pump, by means of which controller the volume flow or mass flow of the paste of variable viscosity is adjustable to a preset setpoint by variation of the delivery pressure at a constant flow cross-section in the spray head (S), a temperature sensor (7) disposed in advance of the spray head (S) for measuring the temperature of the paste as a measure of its viscosity and a device (6) responding to the temperature measured for controlling the supply of pressure gas to the spray head (S) according to a predeterminable width of the paste strip applied along the workpiece (B).

8. Device for applying a paste consisting of a hardenable adhesive to a workpiece (B) in the form of a paste strip, with a spray head (S) actuatable by the paste and movable relative to the workpiece (B), from which head the paste emerges as a viscous adhesive ribbon and which can be acted upon by a pressure gas ejecting the adhesive ribbon and swirling it, forming the paste strip, characterized by a controller disposed in advance of the spray head (S), activating a preferably electrically driven metering pump, by means of which controller the volume flow or mass flow of the paste of variable viscosity is adjustable to a preset setpoint by variation of the delivery pressure at a constant flow cross-section in the spray head (S), and a device (6) responding to the drive pressure or driving power or voltage of the metering pump for controlling the supply of pressure gas to the spray head (S) according to a predeterminable width of the paste strip applied along the workpiece (B).

9. Device according to any one of claims 6 to 8, characterized by a flow meter disposed in advance of the spray head (S) in a feed line for determining the volume flow or mass flow of the paste.

10. Device according to any one of claims 7 to 9, characterized by a device for measuring the piston velocity of a metering cylinder forming the metering pump (3) as a measure for the volume flow.

11. Device according to any one of claims 6 to 10, characterized in that the device (6) for controlling the pressure gas supply contains an analog or digital calibration curve generator.

## Revendications

1. Procédé pour l'application d'une matière pâteuse composée d'un adhésif durcissable sur une pièce à usiner (B), dans lequel la matière pâteuse est amenée sous l'action d'une pression de refoulement à un dispositif de pulvérisation (S) et un cordon d'adhésif visqueux sortant du dispositif de pulvérisation est formé, dans lequel un gaz sous pression faisant sortir le cordon d'adhésif et le fluidisant pour former une bande de matière est appliqué à la matière pâteuse, la pièce à usiner (B) et le dispositif de pulvérisation (S) étant déplacés l'un par rapport à l'autre, dans lequel la pression de refoulement de la matière pâteuse est mesurée avant l'entrée de celle-ci dans le dispositif de pulvérisation (S) et dans lequel la quantité de gaz sous pression amenée par unité de temps en relation fonctionnelle avec la pression de refoulement mesurée est commandée de telle façon qu'une bande de matière pâteuse de largeur constante est pulvérisée le long de la pièce à usiner (B), **caractérisé en ce que** le flux volumique ou massique de la matière pâteuse présentant une viscosité variable est mesuré par l'intermédiaire de la vitesse de piston d'un cylindre de dosage constituant un dispositif de dosage et réglé sur une valeur de consigne prédéterminée avec variation de la pression de refoulement pour une section de passage constante du dispositif de pulvérisation (5).

2. Procédé pour l'application d'une matière pâteuse composée d'un adhésif durcissable sur une pièce à usiner (B), dans lequel la matière pâteuse est amenée sous l'action d'une pression de refoulement à un dispositif de pulvérisation (S) et un cordon d'adhésif visqueux sortant du dispositif de pulvérisation est formé, dans lequel un gaz sous pression faisant sortir le cordon d'adhésif et le fluidisant pour former une bande de matière est appliqué à la matière pâteuse, la pièce à usiner (B) et le dispositif de pulvérisation (S) étant déplacés l'un par rapport à l'autre, dans lequel le flux volumique ou massique de la matière pâteuse présentant une viscosité variable est réglé sur une valeur de consigne prédéterminée avec variation de la pression de refoulement pour une section de passage constante du dispositif de pulvérisation, **caractérisé en ce que** la température de la matière pâteuse est mesurée avant l'entrée de celle-ci dans le dispositif de pulvérisation (S) en tant que critère de sa viscosité et la quantité de gaz sous pression amenée par unité de temps en relation fonctionnelle avec la température mesurée est commandée de telle façon qu'une bande de matière pâteuse de largeur constante est pulvérisée le long de la pièce à usiner (B).

3. Procédé pour l'application d'une matière pâteuse composée d'un adhésif durcissable sur une pièce à usiner (B), dans lequel la matière pâteuse est amenée sous l'action d'une pression de refoulement à un dispositif de pulvérisation (S) et un cordon d'adhésif visqueux sortant du dispositif de pulvérisation est formé, dans lequel un gaz sous pression faisant sortir le cordon d'adhésif et le fluidisant pour former une bande de matière est appliqué à la matière pâteuse, la pièce à usiner (B) et le dispositif de pulvérisation (S) étant déplacés l'un par rapport à l'autre, **caractérisé en ce que** le flux volumique ou massique de la matière pâteuse présentant une viscosité variable est réglé à une valeur de consigne prédéterminée par variation de la pression d'entraînement ou de la puissance d'entraînement d'un dispositif de dosage (3), de préférence à commande électrique, avec variation de la pression de refoulement pour une section de passage constante du dispositif de pulvérisation (S), et la quantité de gaz sous pression amenée par unité de temps en relation fonctionnelle avec la pression d'entraînement ou la puissance d'entraînement ou la tension d'entraînement dérivée de cette dernière est commandée de telle façon qu'une bande de matière pâteuse de largeur constante est pulvérisée le long de la pièce à usiner (B).

4. Procédé suivant l'une des revendications 2 ou 3, **caractérisé en ce que** le flux volumique ou massique est mesuré directement au moyen d'un débitmètre ôu indirectement par l'intermédiaire de la vitesse de piston d'un cylindre de dosage constituant un dispositif de dosage (3).

5. Procédé suivant l'une des revendications 1 a 4, **caractérisé en ce que** la relation fonctionnelle est prédéterminée sous la forme d'une courbe d'étalonnage qui peut être établie empiriquement et être appelée de manière numérique ou analogique.

6. Dispositif pour l'application d'une matière pâteuse composée d'un adhésif durcissable sur une pièce à usiner (B) sous la forme d'une bande de matière, comprenant une tête de pulvérisation (S) pouvant être déplacée par rapport à la pièce à usiner (B) et qui peut être alimentée avec la matière pâteuse, de laquelle la matière pâteuse sort sous forme de cordon d'adhésif visqueux et à laquelle peut être appliqué un gaz sous pression faisant sortir le cordon d'adhésif et le fluidisant pour former la bande de matière, un détecteur de pression (7) placé en amont de la tête de pulvérisation (S) pour mesurer la pression de refoulement de la matière pâteuse et un dispositif (6) répondant à la pression de refoulement mesurée pour commander l'amenée de gaz sous pression à la tête de pulvérisation (S) suivant une largeur pouvant être prédéterminée de la bande de matière appliquée le long de la pièce à usiner (B), **caractérisé par** un dispositif de dosage, qui présente un dispositif pour mesurer la vitesse de piston d'un cylindre de dosage constituant le dispositif de dosage en tant que critère pour le flux volumique, et un régulateur placé en amont de la tête de pulvérisation (S) commandant le dispositif de dosage, lequel permet de régler le flux volumique ou massique de la matière pâteuse présentant une viscosité variable sur une valeur de consigne prédéterminée avec variation de la pression de refoulement pour une section de passage constante dans la tête de pulvérisation (S).

7. Dispositif pour l'application d'une matière pâteuse composée d'un adhésif durcissable sur une pièce à usiner (B) sous la forme d'une bande de matière, comprenant une tête de pulvérisation (S) pouvant être déplacée par rapport à la pièce à usiner (B) et qui peut être alimentée avec la matière pâteuse, de laquelle la matière pâteuse sort sous forme de cordon d'adhésif visqueux et à laquelle peut être appliqué un gaz sous pression faisant sortir le cordon d'adhésif et le fluidisant pour former la bande de matière, **caractérisé par** un régulateur placé en amont de la tête de pulvérisation (S) commandant une pompe de dosage, lequel permet de régler le flux volumique ou massique de la matière pâteuse présentant une viscosité variable sur une valeur de consigne prédéterminée avec variation de la pression de refoulement pour une section de passage constante dans la tête de pulvérisation (S), un détecteur de température (7) placé en amont de la tête de pulvérisation (S) pour mesurer la température de la matière pâteuse en tant que critère de sa viscosité et un dispositif (6) répondant à la température mesurée pour commander l'amenée de gaz sous pression à la tête de pulvérisation (S) suivant une largeur pouvant être prédéterminée de la bande de matière appliquée le long de la pièce à usiner (B).

8. Dispositif pour l'application d'une matière pâteuse composée d'un adhésif durcissable sur une pièce à usiner (B) sous la forme d'une bande de matière, comprenant une tête de pulvérisation (S) pouvant être déplacée par rapport à la pièce à usiner (B) et qui peut être alimentée avec la matière pâteuse, de laquelle la matière pâteuse sort sous forme de cordon d'adhésif visqueux et à laquelle peut être appliqué un gaz sous pression faisant sortir le cordon d'adhésif et le fluidisant pour former la bande de matière **caractérisé par** un régulateur placé en amont de la tête de pulvérisation (S) commandant une pompe de dosage, de préférence à commande électrique, lequel permet de régler le flux volumique ou massique de la matière pâteuse présentant une viscosité variable sur une valeur de consigne prédéterminée avec variation de la pression de refoulement pour une section de passage constante dans la tête de pulvérisation (S), et un dispositif (6) répondant à la pression d'entraînement et respectivement à la puissance ou tension d'entraînement de la pompe de dosage pour commander l'amenée de gaz sous pression à la tête de pulvérisation (S) suivant une largeur pouvant être prédéterminée de la bande de matière appliquée le long de la pièce à usiner (B).

9. Dispositif suivant l'une des revendications 6 à 8, **caractérisé par** un débitmètre placé en amont de la tête de pulvérisation (S) dans une conduite de refoulement pour déterminer le flux volumique ou massique de la matière pâteuse.

10. Dispositif suivant l'une des revendications 7 à 9, **caractérisé par** un dispositif pour mesurer la vitesse de piston d'un cylindre de dosage constituant la pompe de dosage (3) en tant que critère pour le flux volumique.

11. Dispositif suivant l'une des revendications 6 à 10, **caractérisé en ce que** le dispositif (6) de commande de l'amenée de gaz sous pression comporte un générateur de courbes d'étalonnage analogique ou numérique.
